# EUROPEAN PATENT SPECIFICATION

(11) **EP 1 143 048 B1**
(45) Date of publication and mention of the grant of the patent: **28.06.2006**
(21) Application number: 00969969.5
(22) Date of filing: 20.10.2000
(51) Int. Cl.: D01F 6/60, C08G 69/46

(54) **PROCESS FOR PRODUCING META-AROMATIC POLYAMIDE FIBER**
VERFAHREN ZUR HERSTELLUNG VON META-AROMATISCHEN POLYAMIDFASERN
PROCEDE DE PRODUCTION DE FIBRES POLYAMIDES META-AROMATIQUES

(30) Priority: 21.10.1999 JP 29949699; 16.12.1999 JP 35731599
(43) Date of publication of application: 10.10.2001
(73) Proprietor: TEIJIN LIMITED, Osaka-shi Osaka 541-0054 (JP)
(72) Inventor: OHBA, Akihiro C/O Teijin Limited, Iwakuni Factory, Iwakuni-shi, Yamaguchi 740-0014 (JP); YOSHITOMI,Takashi Teijin Limited,Iwakuni Factory, Iwakuni-shi, Yamaguchi 740-0014 (JP); IWASAKI, Hirozumi, Yao-shi, Osaka 581-0814 (JP); TAKIUE,Kotaro C/O Teijin Limited,Matsuyama Factory, Matsuyama-shi, Ehime 791-8041 (JP)
(74) Representative: Hallybone, Huw George
(86) International application number: PCT/JP2000/007353
(87) International publication number: WO 2001/029296

(56) References cited:
- EP-A1- 0 567 987
- WO-A1-94/23099
- JP-A- 8 074 121
- JP-A- 8 074 123

## Description

### Technical Field

The present invention relates to a process for producing meta-type aromatic polyamide filaments having improved quality and an enhanced productivity.

### Background Art

A meta-type aromatic polyamide has a molecular skeleton consisting essentially of aromatic cyclic structures and thus has exhibit excellent heat resistance and flame resistance. Therefore, the meta-type aromatic polyamide is employed for the uses of filaments, films and sheets for which high heat resistance and flame resistance are important.

Filaments of above-mentioned meta-type aromatic polyamide (which may be referred to as meta-type armide hereinafter), for example, poly-meta-phenyleneisophthalamide filaments, are generally produced by one of the following two industrial methods.

Namely, in the first method, a poly-meta-phenyleneisophtalamide solution is produced by low temperature solution polymerization of meta-phenylenediamine with isophthalic acid chloride in N,N-dimethylacetamide; hydrochloric acid dissolved, as a by-product, in the above-mentioned solution is neutralized with calcium hydroxide; and the polymer solution comprising calcium chloride produced by the above-mentioned neutralization and dissolved in the solution is directly subjected to a dry-spinning procedure, as disclosed in Japanese Examined Patent Publication No. 35-14,399 and U.S. Patent No. 3,360,595. In this method, the content of calcium chloride contained in the polymer solution is about 45% by weight, based on the weight of the polyamide.

In the second method, meta-phenylenediamine is reacted with isophthalic acid chloride in an organic solvent, for example, tetrahydrofuran, which is not a good solvent for a meta-type aramid produced from the reaction; the reaction system is brought into contact with an aqueous solution system containing an inorganic acid-acceptor and water-soluble neutral salt, to cause the reaction to be completed; the resultant poly-meta-phenyleneisophthalamide produced in a powder form is isolated (as shown in Japanese Examined Patent Publication No. 47-10,863); the polymer powder is dissolved in an amide-type solvent; and the resultant solution is subjected to a wet-spinning procedure using an inorganic salt-containing aqueous coagulation bath, as shown in Japanese Examined Patent Publication No. 48-17,551.

The first method is advantageous in that the polymer solution can be used as a spinning solution without isolating the polymer, but is disadvantageous in that the spinning procedure is carried out in a dry-spinning method using an amide-type solvent having a high boiling temperature, and thus the energy cost for the spinning procedure is high, and when the number of spinning holes per spinneret is increased, the stability of the spinning procedure is significantly decreased. When the polymer solution is subjected to a wet-spinning procedure using an aqueous coagulation liquid, to solve the above-mentioned problems, almost all of the resultant filaments are devitrificated fibers having a low mechanical strength. Therefore, this wet-spinning method has not yet industrially utilized.

The second method is advantageous in that the problems of the first method do not occur, but is disadvantageous in that the solvent for the polymerization system is different from the solvent for the spinning system, a procedure for re-dissolving the polymer which has been isolated from the polymerization system is necessary and, to obtain a stable solution of the re-dissolved polymer, specific care and an accurate control for the re-dissolving procedure are necessary, as disclosed in Japanese Examined Patent Publication No. 48-4,661.

To solve the above-mentioned problems, currently various attempts have been made to obtain meta-type aramid filaments having a high mechanical strength without loss of clarity of the filaments by wet-spinning a meta-type aramid polymer solution prepared by a solution polymerization.

For example, Japanese Unexamined Patent Publication No. 10-88,421 and No. 10-53,920 provide a process in which a meta-type aromatic polyamide solution containing a salt, at a concentration of 3% by weight or more, is used as a spinning solution; the spinning solution is wet-spun in an aqueous coagulation bath containing a solvent and a salt each in a specific range of concentration, at a specific range of temperature; the spun filaments are treated in a condition-controlling liquid having specific ranges of solvent concentration and salt concentration at a specific temperate range; and the condition-controlled filaments are drawn in an aqueous drawing bath having specific ranges of solvent concentration and a specific salt concentration at a specific temperature range. It is sure that the above-mentioned process enables filaments having excellent mechanical properties to be obtained with a reduced generation of voids. However, this process has a problem that the productivity of the filaments is lower than that of the process in which a spinning solution containing substantially no inorganic salt is used.

As another process, Japanese Unexamined Patent Publications No. 8-74,121 and No. 8-74,122 disclose a process in which an aromatic diamine is reacted with an aromatic dicarboxylic acid chloride in an amide-type solvent; the resultant meta-type aromatic polyamide solution containing hydrochloric acid produced as a by-product is neutralized with calcium hydroxide, calcium oxide or calcium carbonate; the resultant neutralized solution containing an inorganic salt in a high concentration is mixed with specific amounts of an amide-type solvent and water; and the resultant liquid containing the polymer and water each in a specific range of content is employed as a spinning solution for a wet spinning procedure. When the above-mentioned process is carried out by using an aqueous coagulating liquid, the coagulating agent is prevented from penetrating into the coagulated filaments, and thus filaments having a low void content and a high transparency can be produced with a high stability. The filaments have a high drawability and thus drawn filaments having excellent mechanical properties can be obtained. This process, however, has such a problem that when the number of extruding holes of the spinneret is large, for example, 1,000 or 30,000 per spinneret, the wet-spinning with a high stability is difficult, and thus the production of aramid filaments having excellent quality with a high productivity cannot be carried out.

On another hand, as processes for wet-spinning a spinning solution having a low content of the inorganic salts, various processes in which hydrogen chloride produced by the polymerization procedure is neutralized with a specific neutralizing agent which causes a salt produced by the neutralization reaction to be insoluble in the solvent for the polymerization. However, when ammonia gas is used as shown in Japanese Unexamined Patent Publication No. 35-14,399 and Japanese Unexamined Patent Publication No. 49-129,096, it is difficult to completely remove the resultant insoluble ammonium chloride salt from the neutralized intermediate product, and thus, a problem that not only the spinning nozzles are readily soiled, but also that the stability of the wet-spinning procedure is insufficient, occurs. In the processes using a solid neutralizing agent in the form of granules, for example, sodium carbonate or sodium hydroxide, since the neutralization is carried out in the manner of a solid/liquid reaction, and the resultant neutralized salt is insoluble in the solvent and thus deposited on the surfaces of the neutralizing agent granules, the neutralization cannot be completely effected.

Also, in the neutralization procedure using hydrogen solidum carbonate in the state of a solid, as a neutralizing agent, carbon dioxide gas is generated during the neutralization reaction to remove the resultant neutralized salt from the surfaces of the solid neutralizing agent granules and to improve the efficiency of the neutralization procedure. However, the neutralization is imperfectly effected, and the generated gas causes bubbles in the resultant polymer solution and the spinnability of the polymer solution is reduced.

### Disclosure of the Invention.

An object of the present invention is to provide a process, for producing meta-type aromatic polyamide filaments, in which process high quality filaments can be produced by a wet-spinning procedure and the productivity of the filaments can be greatly enhanced.

Another object of the present invention is to provide a process, for producing meta-type aromatic polyamide filaments, in which process hydrogen chloride produced as a by-product in a polymerization procedure can be neutralized with a high efficiency, the by-product salt can be easily removed, and thus the resultant polymer solution can be easily employed, after only a filtration treatment, for a wet-forming procedure, for example, as a spinning solution for a wet-spinning procedure, and by which process, high quality filaments can be produced by a wet-spinning procedure and the productivity of the filaments can be greatly enhanced.

The above-mentioned objects can be attained by the process of the present invention for producing meta-type aromatic polyamide filaments.

The process of the present invention for producing meta-type aromatic polyamide filaments by preparing a solution of a meta-type aromatic polyamide by a solution polymerization method and producing meta-type aromatic polyamide filaments from the aromatic polyamide solution, comprises the series of steps (1) to (7) of:
(1) a polymerization step in which a meta-type aromatic polyamide is prepared by reacting a meta-type aromatic diamine with a meta-type aromatic dicarboxylic acid chloride in a polar organic amide solvent comprising at least one number selected from N-methyl-2-pyrrolidone, N,N-dimethylacetamide, N,N-dimethylformamide, N-methylcaprolactame, N,N,N',N'-tetramethylurea;
(2) a neutralization step in which hydrogen chloride contained in the aromatic polyamide solution obtained in the polymerization step (1) is neutralized with a neutralizing agent comprising an alkali metal hydroxide capable of producing a salt insoluble in the polymerization solvent when reacted with the hydrogen chloride;
(3) a filtering step in which the salt deposited from the aromatic polyamide solution in the neutralization step (2) is removed by filtration at a temperature in the range between 50 and 90°C;
(4) a spinning solution-preparation step in which the aromatic polyamide solution obtained in the filtering step (3) is mixed with water and a polar organic amide solvent comprising at least one number selected from N-methyl-2-pyrrolidone, N,N-dimethylacetamide, N,N-dimethylformamide, N-methylcaprolactame, N,N,N',N'-tetramethylurea, to provide a spinning solution;
(5) a coagulation step in which the meta-type aromatic polyamide-spinning solution obtained in the spinning solution-preparation step (4) is directly extruded in filamentary streams into an aqueous coagulation liquid to coagulate the extruded spinning solution streams into the form of filaments;
(6) a water-washing step in which the filaments delivered from the coagulation step (5) are immersed in water to remove the salts and the solvent from the filaments; and
(7) drawing and heat-treatment steps in which the filaments delivered from the water-washing step (6) are drawn and heat-treated.

In the process of the present invention for producing meta-type aromatic polyamide filaments, preferably in the spinning solution-preparation step (4), the meta-type aromatic polyamide solution is added to a polar organic amide solvent-water mixed liquid having a water content of 25% by weight or less.

In the process of the present invention for producing meta-type aromatic polyamide filaments, preferably 85 molar% or more of the recurring units of the meta-type aromatic polyamide obtained in the polymerization step (1) are meta-phenyleneisophthalamide units.

In the process of the present invention for producing meta-type aromatic polyamide filaments, preferably the polar organic amide solvent used in the polymerization step (1) is N-methyl-2-pyrrolidone or N,N-dimethylacetamide.

In the process of the present invention for producing meta-type aromatic polyamide filaments, the alkali metal hydroxide which reacts with hydrogen chloride in the neutralization step (2) to form the salt insoluble in the polymerization solvent is preferably sodium hydroxide or potassium hydroxide.

In the process of the present invention for producing meta-type aromatic polyamide filaments, preferably in the neutralization step (2), the aromatic polyamide solution is added with an aqueous solution of the alkali metal hydroxide.

In the process of the present invention for producing meta-type aromatic polyamide filaments, the alkali metal hydroxide is preferably in a concentration of 20 to 70% in the aqueous alkali metal hydroxide solution.

The process of the present invention for producing meta-type aromatic polyamide filaments optionally further comprises a step (8) for adding calcium chloride or lithium chloride to the aromatic polyamide solution, before the neutralization step.

In the process for producing meta-type aromatic polyamide filaments, preferably in the neutralization step (2), the neutralizing agent contains at least one member selected from calcium hydroxide and lithium hydroxide, and 5 to 55 molar% of the total amount of hydrogen chloride contained in the aromatic polyamide solution are neutralized with calcium hydroxide and/or lithium hydroxide.

In the process of the present invention for producing meta-type aromatic polyamide filaments, the spinning solution preferably contains calcium chloride and/or lithium chloride in an amount of 3 to 25% by weight based on the weight of the meta-type aromatic polyamide.

In the process of the present invention for producing meta-type aromatic polyamide filaments, the spinning solution preferably contains the meta-type aromatic polyamide in a concentration of 12 to 18% by weight, and water in a content of 25 to 70% by weight based on the weight of the meta-type aromatic polyamide.

### Best Mode of Carrying Out the Invention

In the process of the present invention, firstly a meta-type aromatic polyamide is produced by the step (1) in which the meta-type aromatic amine and the meta-type aromatic dicarboxylic acid halide, which will be exemplified below, are reacted with each other in a polar amide solvent. In this step, additional para-type aromatic compounds may be copolymerized as a copolymerization component.

As the meta-type aromatic diamine as mentioned above, meta-phenylenediamine, 3,4'-diaminodiphenylether, and 3,4'-diaminodiphenylsulfone; and derivatives of the above-mentioned-compounds having substituents such as halogen atoms and/or alkyl groups having 1 to 3 carbon atoms, attached to the aromatic cyclic structures thereof, for example, 2,4-toluylenediamine, 2,6-toluylenediamine, 2,4-diaminochlorobenzene, and 2,6-diaminochlorobenzene, may be employed. Particularly, preferably, meta-phenylenediamine or mixed diamines containing meta-phenylene diamine in a content of 85 molar% or more, more preferably 90 molar% or more, still more preferably 95 molar% or more are employed.

Also, as the meta-type aromatic dicarboxylic acid halides, isophthalic acid halides, for example, isophthalic acid chloride and isophthalic acid bromide; and derivatives of the above-mentioned compounds having substituents, for example, halogen atoms and/or alkoxy groups having 1 to 3 carbon atoms, for example, 3-chloroisophthalic acid chloride and 3-methoxyisophthalic acid chloride, may be employed. Particularly, preferably, isophthalic acid chloride and mixed carboxylic acid halides containing isophthalic acid chloride in a content of 85 molar% or more, more preferably 90 molar% or more, still more preferably 95 molar% or more, are employed.

In the copolymerizable components usable in combination with the diamines and the carboxylic acid halides, the copolymerizable aromatic diamines include benzene derivatives such as para-phenylene diamine, 2,5-diaminochlorobenzene, 2,5-diaminobromobenzene and aminoanisidines; and 1,5-naphthylenediamine, 4,4'-diaminodiphenylether, 4,4'-diaminodiphenylketone, 4,4'-diaminodiphenylamine, 4,4'-diaminodiphenylmethane. Also, the copolymerizable aromatic dicarboxylic acid halides include terephthalic acid chloride, 1,4-naphthalenedicarboxylic acid chloride, 2,6-naphthalenedicarboxylic acid chloride, 4,4'-biphenyldicarboxylic acid chloride and 4,4'-biphenylethercarboxylic acid chloride.

If the copolymerizable component is employed in too large an amount, the resultant meta-type aromatic polyamide may exhibit a degraded property. Thus the copolymerizable component is preferably used in an amount of 15 molar% or less, more preferably 10 molar% or less, based on the total molar amount of the acid components for the polyamide.

The preferable meta-type aromatic polyamide for the present invention is a polyamide having recurring meta-phenylene isophthalamide units in a content of 85 molar% or more, more preferably 90 molar% or more, still more preferably 95 molar% or more, further preferably 100 molar% based on the total recurring units.

The polar organic amide solvents usable for the present invention must comprise at least one member selected from N-methyl-2-pyrrolidone (NMP), N,N-dimethylformamide (DMF), N,N-dimethylacetamide (DMAc), N-methylcaprolactame, and N,N,N',N'-tetramethylurea. Particularly, NMP and DMAc are preferably employed.

The meta-type aromatic polyamide obtained by the polymerization in step (1) preferably has a degree of polymerization corresponding to an intrinsic viscosity (IV) of 1.3 to 3.0, more preferably 1.7 to 2.2, determined by using a concentrated sulfuric acid as a solvent, at a temperature of 30°C.

Since the aromatic polyamide solution obtained by the polymerization step contains hydrogen chloride produced as a by-product of the polymerization reaction, the aromatic polyamide solution is subjected to a neutralization treatment in step (2). The neutralizing agent is not necessarily limited to that of a specific type, as long as it comprises an alkali metal hydroxide and the salt produced by the neutralization reaction is an alkali metal compound insoluble in the polymerization medium (polar organic amide solvent). However, from economical view point, sodium hydroxide and potassium hydroxide, particularly sodium hydroxide, is preferably employed. Also, unless the object of the present invention is hindered, other neutralizing compounds may be employed. For example, lithium hydroxide, calcium hydroxide and calcium oxide, which are soluble in the polymerization solvent, may be employed together with the above-mentioned neutralizing agent.

In step (2), the alkali metal hydroxide may be added in the form of fine particles or in the state of a solid, or in the state of an aqueous solution. Generally, the aqueous solution of the alkali metal hydroxide is preferably employed to neutralize hydrogen chloride produced by the polymerization reaction with a high efficiency, and to enhance the neutralization processability and the filtering property of the neutralized salt in the filtration step (3) which will be explained hereinafter, and the concentration of the neutralizing agent in the aqueous solution is preferably 20 to 70% by weight more preferably 30 to 60% by weight.

If the concentration of the neutralizing agent in the aqueous solution is too high, the sodium hydroxide or potassium hydroxide are easily deposited as a solid during the neutralization reaction and thus the neutralization is difficult to uniformly effect.

The neutralized salt produced as a by-product of the neutralization reaction exhibits a low solubility in the organic amide solvent-containing aromatic polyamide solution and, thus, is substantially not dissolved in the aromatic polyamide solution and deposits as solid particles and, therefore, the neutralized salt is removed by filtration in step (3). There is no limitation to the type of the filtering system and, thus, conventional methods, for example, filtration or centrifugal separation, can be utilized. In this case, there is no limitation to the filtration system and to the filtration material and, thus, conventional filtration systems and materials and specifically designed systems and materials may be utilized.

In the filtration step, if the temperature of the neutralized solution is too high, the stability of the solution may decreased and the content of the salt in the solution may increase, and if the neutralized solution temperature is too low, the filtration property of the solution decreases. Thus, the filtration temperature is preferably in the range between 50 and 90°C, particularly between 70 and 90°C.

Then, into the meta-type aromatic polyamide solution obtained in the filtering step (3), water and a polar organic amide solvent are added together, to prepare a spinning solution (step (4)). In this step, water is preferably added in the state of a solution of water in a content of 25% by weight or less in the organic amide solvent. In the spinning solution, the concentration of the aromatic polyamide is preferably controlled to 12 to 18% by weight, particularly 15 to 17% by weight. Also, the content of water is preferably 25 to 70% by weight, more preferably 30 to 50% by weight, based on the weight of the above-mentioned aromatic polyamide.

By preparing the spinning solution having the aromatic polyamide concentration and the water content in the range as mentioned above, the step stability of the wet spinning step (5) which will be explained below is enhanced, and also, the transparency of the obtained filaments is increased, and the quality of the filaments is improved.

Also, the meta-type aromatic polyamide-spinning solution obtained in the above-mentioned step (4) may contain therein calcium chloride and/or lithium chloride, for the purpose of enhancing the stability of the solution. There is no limitation to means for causing the salts to be contained in the spinning solution. For example, in a stage before the neutralization step, for example, in the polymerization step, calcium chloride and/or lithium chloride may be added to the polymerization reaction solution, or in a stage before or simultaneously with the neutralization step using sodium hydroxide and/or potassium hydroxide, a portion, (preferably 5 to 55 molar%) of hydrogen chloride produced in the polymerization step may be neutralized with calcium hydroxide and/or lithium hydroxide so that the resultant calcium chloride and/or lithium chloride produced as a by-product is dissolved and contained in the spinning solution.

The calcium chloride and/or lithium chloride is preferably contained in a content of 3 to 25% by weight, more preferably 10 to 20% by weight based on the weight of the meta-type aromatic polyamide, in the spinning solution. By controlling the content of calcium chloride and/or lithium chloride to as mentioned above, when water is contained, the stability of the resultant spinning solution is enhanced and simultaneously the coagulating property of the aromatic polyamide during the wet-spinning procedure is enhanced and thus aramid filaments having excellent quality can be obtained.

The meta-type aromatic polyamide solution obtained in the spinning solution-preparation step (4) is fed to step (5) in which the polyamide solution is spun into polyamide filaments by using a wet spinning apparatus. Namely, the spinning solution is directly extruded into an aqueous coagulation liquid and coagulated into the form of solid filaments.

The coagulated polyamide filaments are taken up from the coagulation bath and are immersed in water-washing liquid in the water-washing step (6) (preferably in multistage water-washing step), to control the content of the solvent and the content of the salt remaining in the filaments, and then the polyamide filaments are passed through the draw-heat treating step (7) and thereafter are optionally contained in the form of a tow in a packing can or are wound up or are directly fed to a successive step or, optionally, are crimpled, cut at a desired fiber length and then subjected to a desired processing step.

The spinneret usable in step (5) of the process of the present invention may be a filament-spinneret having 50 to 1,000 spinning holes. When a staple fiber-spinneret having 1,000 to 30,000 spinning holes is used for the process of the present invention, the effect of the present invention can be realized to the maximum. Namely, the spinning solution has a high coagulation property, and therefore, even when the spinneret has a large number of spinning holes, the resultant filamentary streams of the spinning solution can be coagulated with a high stability in the aqueous coagulating bath.
Generally the size of the spinning holes is 0.05 to 0.2 mm. Preferably, during the spinning procedure, the temperature of the meta-type aromatic polyamide solution is in the range of from 50°C to 90°C.

As an aqueous coagulating solution for step (5) of the process of the present invention, a conventional aqueous inorganic salt solution can be employed. For example, an aqueous solution containing calcium chloride in a content of 34 to 42% by weight and NMP in a content of 5 to 10% by weight is preferably employed. When this type of the coagulating liquid is employed, the temperature of the liquid is preferably in the range of from 80 to 95°C.

The rate of withdrawing the coagulated filaments from the aqueous coagulating bath is preferably in the range of from 5 to 25 m/minute. From the view point of enhancing the productivity, the withdrawing rate is more preferably in the range of from 10 to 25 m/minute. The time for immersing the filaments in the coagulating liquid is preferably in the range of from 1.0 to 11 seconds.

The filaments withdrawn from the coagulating liquid are fed into the drawing step (7) in hot water through the water-washing step (6). The water-washing step (6) is preferably carried out in a plurality of stages, for example, 3 to 12 stages. For example, the filaments withdrawn from the coagulating liquid are cooled to a temperature of 60°C or less, and then are introduced into a first water-washing bath at a temperature of 30°C or less. In the first water-washing bath, the content of the polar organic solvent, for example, NMP is preferably in the range of from 15 to 25% by weight, and the washing water is supplemented to the water-washing bath so that the content of the polar inorganic solvent is maintained at the above-mentioned level. In this case, the flow rate and the solvent content of the washing water for the supplementation are provisionally designed. The immersion time of the filaments in the first water-washing bath is preferably 8 to 30 seconds. Then the filaments are further washed in a second water-washing bath at a temperature of 30 to 85°C. The amount of the washing water and the solvent content of the washing water to be supplemented into the second water-washing bath, and the immersion time of the filaments in the second water-washing bath are optionally designed so that the amount of the solvent remaining in the filaments delivered from the water-washing step becomes 15 to 25% by weight based on the weight of the aromatic polyamide and the contents of calcium chloride and/or lithium chloride in the filaments become 0.5% by weight or less.

After the amount of the remaining solvent and the contents of calcium chloride and/or lithium chloride in the filaments are controlled respectively to desired levels or less in the water-washing step (6), the resultant filaments are preferably drawn at a draw ratio of 2.8 to 3.5 in the hot water drawing step (7), while the remaining solvent and salts are wash-removed from the filaments. To keep the drawing step in a good condition, the drawing operation is preferably carried out in a plurality of drawing stages, preferably two stages or more, more preferably three stages or more.

In the step (7), the drawn filaments are dried at a temperature of 100°C or more, and heat-treated by using heating rollers or sheeting plates at a temperature of 270 to 350°C. Optionally, the filaments may be further drawn on the heating plates.

The meta-type aromatic polyamide filaments produced through the process as mentioned above are optionally packed in the form of a tow in a packing can or wound up or fed to successive steps or, optionally, are crimped, and cut to provide staple fibers, and then are subjected to successive processing procedures.

### Examples

The present invention will be further explained by the following examples. In the examples, the following measurements were carried out.
(1) Intrinsic viscosity (IV)
   A sample of the aromatic polyamide was dissolved in 97% concentrated sulfuric acid and the viscosity of the solution was determined at a.temperature of 30°C by an Ostwald viscometer.
(2) Thickness
   The thickness of filaments was determined in accordance with JIS L 1015.
(3) Tensile strength and ultimate elongation
   In accordance with JIS L 1074, a specimen having a fiber length of 20 mm was subjected to a tensile test under an initial load of 0.044 cN/dtex (0.05 g/denier) at a elongation rate of 20 mm/minute.

### Example 1

A reaction container equipped with a thermometer, a stirrer and material-feeding inlet was charged with 961.0 parts by weight of NMP having a water content of 100 ppm or less, and 100.0 parts by weight of meta-phenylenediamine were dissolved in the NMP. The resultant solution was cooled to a temperature of 0°C. Into the cooled diamine solution, 187.7 parts by weight of isophthalic acid chloride were gradually added to cause them to be reacted with each other. During the reaction, the temperature of the reaction solution raised up to 70°C. After the stirring was continued for 60 minutes after the start of the reaction, 98.0 parts by weight of an NMP slurry of calcium hydroxide in a concentration of 22.5 % by weight was mixed to the solution, and then the mixed solution was stirred for 20 minutes. Then, to the resultant solution, 104.1 parts by weight of an aqueous solution of sodium hydroxide in a concentration of 44.0% by weight were mixed, the resultant mixed solution was stirred for 60 minutes to complete the reaction, and then the resultant polymer solution was taken up from the reaction container. The polymer solution was filtered at a temperature of 90°C to remove the precipitated sodium chloride. A clear polymer solution was collected. In the filtration, the filtering rate per unit filtering area was 25 kg/m². The filtrate polymer solution was maintained at a temperature of 60°C.

From this polymer solution, the resultant polymetaphenyleneisophthalamide was isolated, and the intrinsic viscosity (IV) of the polymer was measured. The measured IV value was 1.97. Also, in the polymer solution, the concentration of the polymer was 16.0% by weight, the content of calcium chloride was 15% by weight based on the weight of the polymer, and the content of water was 39.4% by weight based on the weight of the polymer.

The polymer solution in an amount of 100 parts by weight was mixed with 3.22 parts by weight of a solution of NMP in water in a mixing ratio water/NMP of 25/75. A clear spinning solution was obtained. In this spinning solution, the concentration of the polymer was 15.5% by weight and the content of water was 44.4% by weight based on the weight of the polymer.

The spinning solution (60°C) was directly extruded through a spinneret having a spinning hole diameter of 0.07 mm and 15,000 spinning holes into a coagulation liquid and the resultant filamentary product was taken up from the coagulation liquid. The coagulation liquid consisted of an aqueous solution comprising 40% by weight of calcium chloride and 5% by weight of NMP and had a temperature of 90°C. The immersion time of the filaments in the coagulation liquid was 1.7 seconds, and the coagulated filaments were taken up at a speed of 16 m/min.

The resultant filament bundle was cooled to a temperature of 50°C, introduced into and passed through a first water-washing bath at a water temperature of 25°C, a second water-washing bath at a water temperature of 45°C and a third water-washing bath at a water temperature of 70°C, to wash, with water, the filaments to such an extent that the amount of the solvent remaining the filaments is reduced to 18% by weight based on the weight of the polymer. In this washing procedure, the composition of the aqueous solution for the first water-washing bath was controlled so that the contents of NMP was maintained at 22% by weight and the content of calcium chloride was maintained at 14% by weight.

The water-washed filaments were subjected to a three step drawing procedure in a hot water at a temperature of 98°C at a first draw ratio of 1.4 in the first step, a second draw ratio of 1.95 in the second step and a third draw ratio of 1.1 in the third step.

The drawn filaments were passed through a drying roll at a temperature of 170°C to dry the filaments; pre-heated on a pre-heating roller at a temperature of 200°C, heat-set on a roller at a temperature of 340°C, and cooled on a cooling roller to a temperature of 30°C. The cooled filaments were oiled with an oiling agent and wound up. A drawn filament tow of a yarn count of 33,333.3 dtex/15,000 filaments (30,000 denier/15,000 filaments) was obtained. While observing the forwarding of the filament tow after the hot water drawing procedure, the number of the detected fluffs on the filament tow was less than 1 fluff/min, which is low and good. Also, filtration pressure-rising rate of the filter located upstream to the spinneret for the spinning solution was less than 0.1 MPa/day which is low and good.

### Comparative Example 1

A reaction container equipped with a thermometer, a stirrer and material-feeding inlet was charged with 993.0 parts by weight of NMP having a water content of 100 ppm or less, and 100.0 parts by weight of meta-phenylenediamine were dissolved in the NMP. The resultant solution was cooled to a temperature of 0°C. Into the cooled diamine solution, 187.7 parts by weight of isophthalic acid chloride were gradually mixed to cause them to be reacted with each other. During the reaction, the temperature of the reaction solution increased to 70°C. After the stirring was continued for 60 minutes after the start of the reaction, 98.0 parts by weight of an NMP slurry of calcium hydroxide in a concentration of 22.5 parts by weight was mixed to the solution, and then the mixed solution was stirred for 20 minutes. Then, the resultant solution and 115.0 parts by weight of an aqueous solution of sodium hydroxide in a concentration of 44.0% by weight were mixed, the resultant mixed solution was stirred for 60 minutes to complete the reaction, and then the resultant polymer solution was taken up from the reaction container. The polymer solution was filtered at a temperature of 90°C to remove the precipitated sodium chloride. A clear polymer solution was collected. In the filtration, the average filtering rate per unit filtering area during the time between 30 minutes to 3 hours after the start of the filtration was 30 kg/m²/hr. The resultant filtrate polymer solution was maintained at a temperature of 60°C.

From this polymer solution, the resultant polymetaphenyleneisophthalamide was isolated, and the intrinsic viscosity (IV) of the polymer was measured. The measured IV value was 1.97. Also, in the polymer solution, the concentration of the polymer was 15.5% by weight, the content of calcium chloride was 15% by weight based on the weight of the polymer, and the content of water was 44.4% by weight based on the weight of the polymer.

The polymer solution was employed as a spinning solution (60°C), and the spinning solution was subjected to spinning, water-washing, drawing and heat-treating procedures in the same manner as in Example 1.

A drawn filament tow of a yarn count of 33,333.3 dtex/15,000 filaments (30,000 denier/15,000 filaments) was obtained. In the spinning procedure, the filtration pressure on the filter located upstream to the spinneret increased at a rate of 0.5 MPa/hour, and thus the spinning operation could not be continued over a long time. While observing the forwarding of the filament tow after the hot water drawing procedure, the number of the detected fluffs on the filament tow was less than 1 fluff/min which is small and good. The resultant filaments had a high gloss.

The filter located upstream to the spinneret was checked and it was confirmed that the filter was soiled with salt.

### Comparative Example 2

The same polymer solution as that obtained in Comparative Example 1 was cooled to a temperature of 30°C. The cooled polymer solution was filtered at the above-mentioned temperature to remove sodium chloride. A clear polymer solution was obtained. In the filtration, the average filtration rate per unit filtration area was 9 kg/m². Thus the polymer solution was found inappropriate to practical production of the filaments.

The filtered polymer solution was heated to a temperature of 60°C, and subjected to the same spinning, water-washing, drawing and heat-treating procedures, and a drawn filament tow having a yarn count of 33,333 dtex/15,000 filaments (30,000 denier/15,000 filaments) was obtained. The filtration pressure rising rate on the filter located upstream to the spinneret was less than 0.1 MPa/day which is low and good. After the drawing procedure in hot water, the forwarding filament tow was checked. As a result, the number of the detected fluffs was less than 1 fluff/min which is small and good. The filaments were glossy filaments.

### Example 2

A reaction container equipped with a thermometer, a stirrer and material-feeding inlet was charged with 918.0 parts by weight of NMP having a water content of 100 ppm or less, and 100.0 parts by weight of meta-phenylenediamine were dissolved in the NMP, and the resultant solution was cooled to a temperature of 0°C in the same manner as in Example 1. Into the cooled diamine solution, 187.7 parts by weight of isophthalic acid chloride were gradually added to cause them to be reacted with each other. During the reaction, the temperature of the reaction solution raised up to 70°C. After the stirring was continued for 60 minutes after the start of the reaction, 65.5 parts by weight of an NMP slurry of calcium hydroxide in a concentration of 22.5 parts by weight was mixed to the solution, and then the mixed solution was stirred for 20 minutes. Then, to the resultant solution, 120.0 parts by weight of an aqueous solution of sodium hydroxide in a concentration of 44.0% by weight were mixed, and the resultant mixed solution was stirred for 60 minutes to complete the reaction. Then the resultant polymer solution was taken up from the reaction container, and filtered at a temperature of 90°C to remove the precipitated sodium chloride. A clear polymer solution was collected. In the filtration, the average filtering rate per unit filtering area during the time between 30 minutes and 3 hours after the start of the filtration was 21 kg/m²/hr. The filtrate polymer solution was maintained at a temperature of 60°C.

From this polymer solution, the resultant polymetaphenyleneisophthalamide was isolated, and the intrinsic viscosity (IV) of the polymer was measured. The measured IV value was 1.95. Also, in the polymer solution, the concentration of the polymer was 16.9% by weight, the content of calcium chloride was 10% by weight based on the weight of the polymer, and the content of water was 43.1% by weight based on the weight of the polymer.

The polymer solution in an amount of 100 parts by weight was mixed with 4.56 parts by weight of a solution of NMP in water in a mixing ratio of water to NMP of 25/75. A clear spinning solution was obtained. In this spinning solution, the concentration of the polymer was 16.1% by weight and the content of water was 49.9% by weight based on the weight of the polymer.

The spinning solution (60°C) was subjected to the same spinning, water-washing, drawing and heat-treating procedures as those in Example 1.

A drawn filament tow of a yarn count of 33,333.3 dtex/15,000 filaments (30,000 denier/15,000 filaments) was obtained. While observing the forwarding of the filament tow after the hot water drawing procedure, the number of the detected fluffs on the filament tow was less than 1 fluff/min, which is small and good. The resultant filaments were glossy. Also, filtration pressure-rising rate of the filter located upstream to the spinneret for the spinning solution is less than 0.1 MPa/day which is low and good.

### Example 3

A reaction container equipped with a thermometer, a stirrer and material-feeding inlet was charged with 981.7 parts by weight of NMP having a water content of 100 ppm or less, 100.0 parts by weight of meta-phenylenediamine were dissolved in the NMP, and the resultant solution was cooled to a temperature of 0°C, in the same manner as in Example 1. To the cooled diamine solution, 187.7 parts by weight of isophthalic acid chloride were gradually added to cause them to be reacted with each other. During the reaction, the temperature of the reaction solution raised up to 70°C. After the stirring was continued for 60 minutes after the start of the reaction, 98.0 parts by weight of an NMP slurry of calcium hydroxide in a concentration of 22.5 parts by weight was mixed to the solution, and then the mixed solution was stirred for 20 minutes. Then, the resultant solution and 83.9 parts by weight of an aqueous solution of sodium hydroxide in a concentration of 60.0% by weight were mixed, the resultant mixed solution was stirred for 60 minutes to complete the reaction, and then the resultant polymer solution was taken up from the reaction container. The polymer solution was filtered at a temperature of 90°C to remove the precipitated sodium chloride. A clear polymer solution was collected. In the filtration, the average filtering rate per unit filtering area during the time between 30 minutes to 3 hours after the start of the filtration was 25 kg/m²/hr. The filtrate polymerization solution was maintained at a temperature of 60°C.

From this polymerization solution, the resultant polymetaphenyleneisophthalamide was isolated, and the intrinsic viscosity (IV) of the polymer was measured. The measured IV value was 1.95. Also, in the polymer solution, the concentration of the polymer was 16.0% by weight, the content of calcium chloride was 15% by weight based on the weight of the polymer, and the content of water was 30.4% by weight based on the weight of the polymer.

The polymer solution in an amount of 100 parts by weight was mixed with 3.22 parts by weight of a solution of NMP in water in a mixing ratio of water to NMP of 25/75. A clear spinning solution was obtained. In this spinning solution, the concentration of the polymer was 15.5% by weight and the content of water was 35.4% by weight based on the weight of the polymer.

The spinning solution (60°) was subjected to the same spinning, water-washing, drawing and heat-treating procedures as those in Example 1, and a drawn filament tow of a yarn count of 33,333.3 dtex/15,000 filaments (30,000 denier/15,000 filaments) was obtained. While observing the forwarding of the filament tow after the hot water drawing procedure, the number of the detected fluffs on the filament tow was less than 1 fluff/min, which was small and good. The resultant filaments were glossy. Also, filtration pressure-rising rate of the filter located upstream to the spinneret for the spinning solution was less than 0.1 MPa/day which was low and good.

As results of the above-mentioned examples and comparative examples, the tensile strength and elongation property of the resultant filaments and the amount of voids formed in the coagulated filaments and determined by naked eye observation are shown in Table 1.

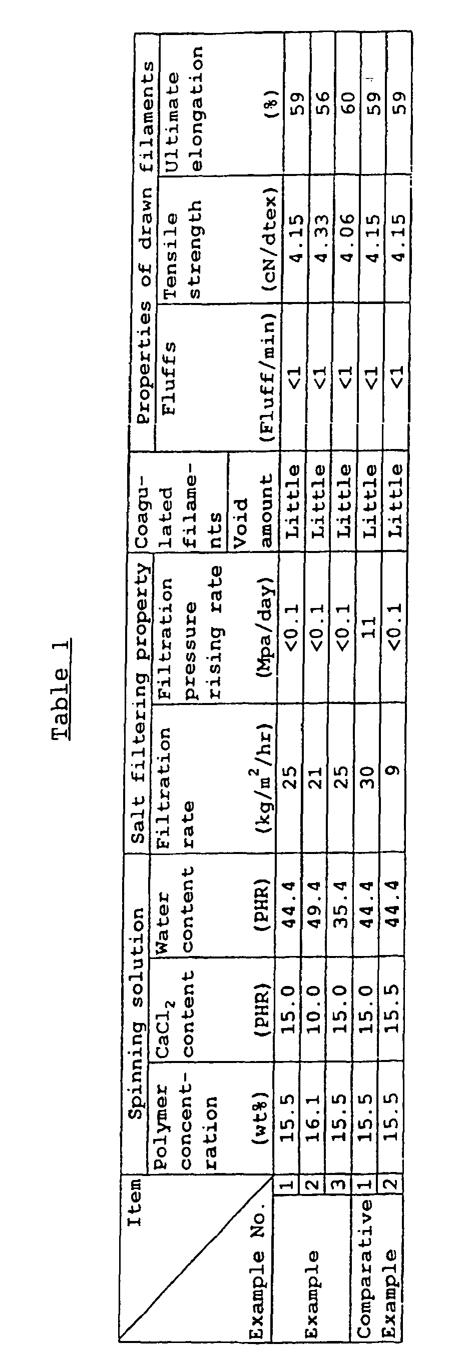

### Industrial Applicability

In accordance with the production process of the present invention, meta-type aromatic polyamide fibers having excellent quality can be produced from a meta-type aromatic polyamide solution having an excellent stability and a superior coagulation property in a wet-spinning procedure with excellent processability and high productivity.

## Claims

1. A process for producing meta-type aromatic polyamide filaments by preparing a solution of a meta-type aromatic polyamide by a solution polymerization method and producing meta-type aromatic polyamide filaments from the aromatic polyamide solution, which process comprises a series of steps (1) to (7) of:
(1) a polymerization step in which a meta-type aromatic polyamide is prepared by reacting a meta-type aromatic diamine with a meta-type aromatic dicarboxylic acid chloride in a polar organic amide solvent comprising at least one member selected from N-methyl-2-pyrrolidone, N,N-dimethylacetamide, N,N-dimethylformamide, N-methylaprolactame, N,N,N',N'-tetramethylurea;
(2) a neutralization step in which hydrogen chloride contained in the aromatic polyamide solution obtained in the polymerization step (1) is neutralized with a neutralizing agent comprising an alkali metal hydroxide capable of producing a salt insoluble in the polymerization solvent when reacted with the hydrogen chloride;
(3) a filtering step in which the salt deposited from the aromatic polyamide solution in the neutralization step (2) is removed by filtration at a temperature in the range between 50 and 90°C;
(4) a spinning solution-preparation step in which the aromatic polyamide solution obtained in the filtering step (3) is mixed with water and a polar organic amide solvent comprising at least one member selected from N-methyl-2-pyrrolidone, N,N-dimethylacetamide, N,N-dimethylformamide, N-methylaprolactame, N,N,N',N'-tetramethylurea, to provide a spinning solution;
(5) a coagulation step in which the meta-type aromatic polyamide-spinning solution obtained in the spinning solution-preparation step (4) is directly extruded in filamentary streams into an aqueous coagulation liquid to coagulate the extruded spinning solution streams into the form of filaments;
(6) a water-washing step in which the filaments delivered from the coagulation step (5) are immersed in water to remove the salts and the solvent from the filaments; and
(7) drawing and heat-treatment steps in which the filaments delivered from the water-washing step (6) are drawn and heat-treated.

2. The process for producing meta-type aromatic polyamide filaments as claimed in claim 1, wherein in the spinning solution-preparation step (4), the meta-type aromatic polyamide solution is added with a polar organic amide solvent-water mixed liquid having a water content of 25% by weight or less.

3. The process for producing meta-type aromatic polyamide filaments as claimed in claim 1, wherein 85 molar% or more of the recurring units of the meta-type aromatic polyamide obtained in the polymerization step (1) are meta-phenyleneisophthalamide units.

4. The process for producing meta-type aromatic polyamide filaments as claimed in claim 1, wherein the alkali metal hydroxide which reacts with hydrogen chloride in the neutralization step (2) to form the salt insoluble in the polymerization solvent is sodium hydroxide or potassium hydroxide.

5. The process for producing meta-type aromatic polyamide filaments as claimed in claim 1, wherein in the neutralization step (2), the aromatic polyamide solution is added with an aqueous solution of the alkali metal hydroxide.

6. The process for producing meta-type aromatic polyamide filaments as claimed in claim 5, wherein the alkali metal hydroxide is in a concentration of 20 to 70% in the aqueous alkali metal hydroxide solution.

7. The process for producing meta-type aromatic polyamide filaments as claimed in claim 1, further comprising a step (8) for adding calcium chloride or lithium chloride to the aromatic polyamide solution, before the neutralization step.

8. The process for producing meta-type aromatic polyamide filaments as claimed in claim 1, wherein in the neutralization step (2), the neutralizing agent contains at least one member selected from calcium hydroxide and lithium hydroxide, and 5 to 55 molar% of the total amount of hydrogen chloride contained in the aromatic polyamide solution are neutralized with calcium hydroxide and/or lithium hydroxide.

9. The process for producing meta-type aromatic polyamide filaments as claimed in claim 7 or 8, wherein the spinning solution contains calcium chloride and/or lithium chloride in an amount of 3 to 25% by weight based on the weight of the meta-type aromatic polyamide.

10. The process for producing meta-type aromatic polyamide filaments as claimed in claim 1, wherein the spinning solution contains the meta-type aromatic polyamide in a concentration of 12 to 18% by weight, and water in a content of 25 to 70% by weight based on the weight of the meta-type aromatic polyamide.

## Patentansprüche

1. Verfahren zur Herstellung von meta-aromatischen Polyamid-Filamenten durch Herstellen einer Lösung eines meta-aromatischen Polyamids nach einem Lösungspolymerisationsverfahren und Herstellen von meta-aromatischen Polyamid-Filamenten aus der aromatischen Polyamid-Lösung, wobei das Verfahren eine Reihe von Schritten (1) bis (7) umfasst, welche sind:
(1) ein Polymerisationsschritt, wobei ein meta-aromatisches Polyamid hergestellt wird durch Reagierenlassen eines meta-aromatischen Diamins mit einem meta-aromatischen Dicarbonsäurechlorid in einem polaren organischen Amid-Lösemittel, umfassend mindestens einen Bestandteil, ausgewählt aus N-Methyl-2-pyrrolidon, N,N-Dimethylacetamid, N,N-Dimethylformamid, N-Methylcaprolactam, N,N,N',N'-Tetramethylhamstoff;
(2) ein Neutralisationsschritt, wobei in der in dem Polymerisationsschritt (1) erhaltenen aromatischen Polyamid-Lösung enthaltenes Wasserstoffchlorid mit einem Neutralisierungsagens neutralisiert wird, welches ein Alkalimetallhydroxid umfasst, das zur Bildung eines in dem Palymerisationslösemittel unlöslichen Salzes befähigt ist, wenn es mit dem Wasserstoffchlorid reagieren gelassen wird;
(3) ein Filtrationsschritt, wobei das in dem Neutralisationsschritt (2) aus der aromatischen Polyamid-Lösung abgeschiedene Salz durch Filtration bei einer Temperatur im Bereich zwischen 50 und 90 °C entfernt wird;
(4) ein Spinnlösungsherstellungsschritt, wobei die in dem Filtrationsschritt (3) erhaltene aromatische Polyamid-Lösung mit Wasser und einem polaren organischen Amid-Lösemittel, umfassend mindestens einen Bestandteil, der ausgewählt ist aus N-Methyl-2-pyrrolidon, N,N-Dimethylacetamid, N,N-Dimethylformamid, N-Methylcaprolactam, N,N,N',N'-Tetramethylharnstoff, gemischt wird, um eine Spinnlösung bereitzustellen;
(5) ein Koagulationsschritt, wobei die in dem Spinnlösungsherstellungsschritt (4) erhaltene meta-aromatische Polyamid-Spinnlösung in Filamentströmen direkt in eine wässrige Koagulationsflüssigkeit extrudiert wird, um die extrudierten Spinnlösungsströme in die Form von Filamenten zu koagulieren;
(6) ein Wasserwäsche-Schritt, wobei die von dem Koagulationsschritt (5) gelieferten Filamente in Wasser getaucht werden, um die Salze und das Lösemittel von den Filamenten zu entfernen; und
(7) Streck- und Wärmebehandlungsschritte, wobei die von dem Wasserwäsche-Schritt (6) gelieferten Filamente gestreckt und wärmebehandelt werden.

2. Verfahren zur Herstellung von meta-aromatischen Polyamid-Filamenten nach Anspruch 1, wobei in dem Spinnlösungsherstellungsschritt (4) der meta-aromatischen Polyamid-Lösung eine polare organische Amid-Lösemittel/Wasser-Mischflüssigkeit mit einem Wassergehalt von 25 Gew.% oder weniger zugegeben wird.

3. Verfahren zur Herstellung von meta-aromatischen Polyamid-Filamenten nach Anspruch 1, wobei 85 mol% oder mehr der wiederkehrenden Einheiten des in dem Polymerisationsschritt (1) erhaltenen meta-aromatischen Polyamids meta-Phenylenisophthalamid-Einheiten sind.

4. Verfahren zur Herstellung von meta-aromatischen Polyamid-Filamenten nach Anspruch 1, wobei das Alkalimetallhydroxid, welches mit Wasserstoffchlorid in dem Neutralisationsschritt (2) reagiert, um das in dem Polymerisationslösemittel unlösliche Salz zu bilden, Natriumhydroxid oder Kaliumhydroxid ist.

5. Verfahren zur Herstellung von meta-aromatischen Polyamid-Filamenten nach Anspruch 1, wobei in dem Neutralisationsschritt (2) der aromatischen Polyamid-Lösung eine wässrige Lösung des Alkalimetallhydroxids zugegeben wird.

6. Verfahren zur Herstellung von meta-aromatischen Polyamid-Filamenten nach Anspruch 5, wobei das Alkalimetallhydroxid in einer Konzentration von 20 bis 70 % in der wässrigen Alkalimetallhydroxid-Lösung vorliegt.

7. Verfahren zur Herstellung von meta-aromatischen Polyamid-Filamenten nach Anspruch 1, ferner umfassend einen Schritt (8) zum Zugeben von Calciumchlorid oder Lithiumchlorid zu der aromatischen Polyamid-Lösung vor dem Neutralisationsschritt.

8. Verfahren zur Herstellung von meta-aromatischen Polyamid-Filamenten nach Anspruch 1, wobei in dem Neutralisationsschritt (2) das Neutralisierungsagens mindestens einen Bestandteil enthält, der ausgewählt ist aus Calciumhydroxid und Lithiumhydroxid, und wobei 5 bis 55 mol% der in der aromatischen Polyamid-Lösung enthaltenen Gesamtmenge an Wasserstoffchlorid mit Calciumhydroxid und/oder Lithiumhydroxid neutralisiert werden.

9. Verfahren zur Herstellung von meta-aromatischen Polyamid-Filamenten nach Anspruch 7 oder 8, wobei die Spinnlösung Calciumchlorid und/oder Lithiumchlorid in einer Menge von 3 bis 25 Gew.%, basierend auf dem Ge wicht des meta-aromatischen Polyamids, enthält.

10. Verfahren zur Herstellung von meta-aromatischen Polyamid-Filamenten nach Anspruch 1, wobei die Spinnlösung das meta-aromatische Polyamid in einer Konzentration von 12 bis 18 Gew.% und Wasser in einer Menge von 25 bis 70 Gew.%, basierend auf dem Gewicht des meta-aromatischen Polyamids, enthält.

## Revendications

1. Procédé de production de filaments de polyamide aromatique du type méta en préparant une solution d'un polyamide aromatique du type méta grâce à un procédé de polymérisation en solution et en produisant des filaments de polyamide aromatique du type méta à partir d'une solution de polyamide aromatique, lequel procédé comprend une série d'étapes (1) à (7) consistant à :
(1) une étape de polymérisation au cours de laquelle un polyamide aromatique du type méta est préparé en faisant réagir une diamine aromatique du type méta avec un chlorure d'acide dicarboxylique aromatique du type méta dans un solvant amidique organique polaire comprenant au moins un élément choisi parmi la N-méthyl-2-pyrrolidone, le N,N-diméthylacétamide, le N,N-diméthylformamide, le N-méthylcaprolactane, la N,N,N',N'-tétraméthylurée ;
(2) une étape de neutralisation au cours de laquelle le chlorure d'hydrogène contenu dans la solution de polyamide aromatique obtenue au cours de l'étape de polymérisation (1) est neutralisé avec un agent neutralisant comprenant un hydroxyde de métal alcalin capable de produire un sel insoluble dans le solvant de polymérisation lorsqu'il est mis à réagir avec le chlorure d'hydrogène ;
(3) une étape de filtration au cours de laquelle le sel déposé provenant de la solution de polyamide aromatique au cours de l'étape de neutralisation (2) est extrait par filtration, à une température dans la plage entre 50 et 90°C ;
(4) une étape de préparation de solution de filage au cours de laquelle la solution de polyamide aromatique obtenue au cours de l'étape de filtration (3) est mélangée à de l'eau et à un solvant amidique organique polaire comprenant au moins un élément choisi parmi la N-méthyl-2-pyrrolidone, le N,N-diméthylacétamide, le N,N-diméthylformamide, le N-méthylcaprolactane, la N,N,N',N'-tétraméthylurée, afin de fournir une solution de filage ;
(5) une étape de coagulation au cours de laquelle la solution de filage de polyamide aromatique du type méta obtenue au cours de l'étape de préparation de solution de filage (4) est directement extrudée sous la forme d'écoulements de filaments en un liquide de coagulation aqueux, afin de faire coaguler les écoulements de solution de filage extrudée sous la forme de filaments ;
(6) une étape de lavage à l'eau au cours de laquelle les filaments délivrés au cours de l'étape de coagulation (5) sont immergés dans de l'eau pour extraire les sels et le solvant des filaments ; et
(7) les étapes d'étirage et de traitement thermique pendant lesquelles les filaments délivrés au cours de l'étape de lavage à l'eau (6) sont étirés et traités thermiquement.

2. Procédé de production de filaments de polyamide aromatique du type méta selon la revendication 1, dans lequel, au cours de l'étape de préparation de la solution de filage (4), la solution de polyamide aromatique du type méta est ajoutée à un liquide mélangé d'eau et de solvant amidique organique polaire ayant une teneur en eau de 25 % en poids ou moins.

3. Procédé de production de filaments de polyamide aromatique du type méta selon la revendication 1, dans lequel 85 % molaires ou plus des unités récurrentes du polyamide aromatique du type méta obtenu au cours de l'étape de polymérisation (1) sont des unités de méta-phénylèneisophtalamide.

4. Procédé de production de filaments de polyamide aromatique du type méta selon la revendication 1, dans lequel l'hydroxyde de métal alcalin qui réagit avec le chlorure d'hydrogène au cours de l'étape de neutralisation (2) pour former le sel insoluble dans le solvant de polymérisation est de l'hydroxyde de sodium ou de l'hydroxyde de potassium.

5. Procédé de production de filaments de polyamide aromatique du type méta selon la revendication 1, dans lequel au cours de l'étape de neutralisation (2), la solution de polyamide aromatique est ajoutée à une solution aqueuse de l'hydroxyde de métal alcalin.

6. Procédé de production de filaments de polyamide aromatique du type méta selon la revendication 5, dans lequel l'hydroxyde de métal alcalin se trouve en une concentration de 20 à 70 % dans la solution aqueuse d'hydroxyde de métal alcalin.

7. Procédé de production de filaments de polyamide aromatique du type méta selon la revendication 1, comprenant en outre une étape (8) d'addition de chlorure de calcium ou de chlorure de lithium à la solution de polyamide aromatique, avant l'étape de neutralisation.

8. Procédé de production de filaments de polyamide aromatique du type méta selon la revendication 1, dans lequel, au cours de l'étape de neutralisation (2), l'agent neutralisant contient au moins un élément choisi parmi l'hydroxyde de calcium et l'hydroxyde de lithium, et 5 à 55 % molaires de la quantité totale de chlorure d'hydrogène contenu dans la solution de polyamide aromatique sont neutralisés avec de l'hydroxyde de calcium et/ou de l'hydroxyde de lithium.

9. Procédé de production de filaments de polyamide aromatique du type méta selon les revendications 7 et 8, dans lequel la solution de filage contient du chlorure de calcium et/ou du chlorure de lithium en une quantité de 3 à 25 % en poids par rapport au poids du polyamide aromatique du type méta.

10. Procédé de production de filaments de polyamide aromatique du type méta selon la revendication 1, dans lequel la solution de filage contient le polyamide aromatique du type méta en une concentration de 12 à 18 % en poids, et de l'eau en une teneur de 25 à 70 % en poids par rapport au poids du polyamide aromatique du type méta.
